Europäisches Patentamt

European Patent Office

Office européen des brevets

(19)

(11) Veröffentlichungsnummer: **0 176 675**

**A1**

# (12) EUROPÄISCHE PATENTANMELDUNG

(21) Anmeldenummer: **85108649.6**

(22) Anmeldetag: **11.07.85**

(51) Int. Cl.⁴: **B 62 D 55/20**

(30) Priorität: **08.08.84 DE 3429171**

(43) Veröffentlichungstag der Anmeldung:
**09.04.86 Patentblatt 86/15**

(84) Benannte Vertragsstaaten:
**AT BE CH FR GB IT LI NL SE**

(71) Anmelder: **Krauss-Maffei Aktiengesellschaft**
**Krauss-Maffei-Strasse 2**
**D-8000 München 50(DE)**

(72) Erfinder: **Schlegl, Eugen, Ing. grad.**
**Akeleistrasse 26**
**D-8031 Gröbenzell(DE)**

(54) **Gleiskette.**

(57) Ein Kettenglied einer Gleiskette ist an seinen Verbindungsstellen zu den anschließenden Kettengliedern von Bolzen, beispielsweise Verbinderbolzen oder Scharnierbolzen durchsetzt, mit denen die Kettenglieder miteinander form- und kraftschlüssig verbunden sind.

Um bei einer Gleiskette dieser Art Eigenschaften einer gliedlosen Endloskette zu schaffen, ist das Kettenglied aus einem elastomeren Material gefertigt, in dem biegeweiche Fäden hoher Zugfestigkeit in einer Weise eingelagert sind, in der die Fäden zwischen den beiden Verbindungsstellen hin- und hergeführt sind, wobei die Fäden die Querschnittsflächen der an den beiden Verbindungsstellen gelagerten Bolzen (Verbinderbolzen oder Scharnierbolzen) im jeweils abwechselnden Drehsinn umschlingen.

./...

_Fig. 1_

_Fig. 2_

0176675

Krauss-Maffei
Aktiengesellschaft
8000 München 50

KMF 99a

- 1 -

<u>Gleiskette</u>

Die Erfindung bezieht sich auf eine Gleiskette gemäß dem Oberbegriff des Anspruchs 1.

Aus der DE-OS 27 06 891 ist bereits eine Gleiskette bekannt, deren Kettenglieder aus elastomerem
Material bestehen, in dem zwischen den Verbindungsstellen zu den anschließenden Kettengliedern eine
Drahtseilschlinge eingebettet ist.

Diese Anordnung hat den Nachteil, daß sich die gesamte zu übertragende Kettenzugkraft auf die beiden
Drahtseilstränge konzentriert, wodurch die zwischen
den Drahtseilsträngen gelegenen Bereiche aus elastomerem Material keine Versteifung erfahren und zusätzliche Bewehrungsmittel, wie z.B. Cordeinlagen
erfordern. Die Übertragung von Querkräften ist dabei
nur in begrenztem Maße möglich.

Aus der DE-OS 26 14 963 ist ferner eine Gleiskette
bekannt, deren Kettenglieder aus elastomerem Material
bestehen und die an den Verbindungsstellen zu den
anschließenden Kettengliedern Querstege aus Stahl
aufweisen, die mit den Querstegen der anschließenden Kettenglieder starr und formschlüssig verbindbar sind, wobei das Kettenglied zwischen den Querstegen aus elastomerem Material besteht, in dem Rundgliederketten aus Stahl einvulkanisiert sind.

Die Rundkettenglieder sind zwar im Gummimaterial eingebettet, sie sind jedoch bei Zugbelastung und der ständigen Biegung einem Reibungsverschleiß ausgesetzt, der die Kettenlebensdauer begrenzt. Im Bereich der Rundkettenglieder ist der Gummi ferner starker Walkarbeit ausgesetzt, die zu einer frühzeitigen Alterung des Gummimaterials führen kann.

Der Bereich der Kettenglieder zwischen den Querstegen ist ferner nicht zur Übertragung von Querkräften geeignet, wofür besonders ausgebildete Kettenführungszähne erforderlich sind.

Der Erfindung liegt die Aufgabe zugrunde, eine Gleiskette der genannten Art mit Eigenschaften einer gliedlosen Endloskette bzw. einer ungeteilten Bandkette zu schaffen, die aus auswechselbaren Kettengliedern zusammengesetzt ist und die zur Aufnahme von Querkräften geeignet ist.

Die Lösung dieser Aufgabe wird durch die kennzeichnenden Merkmale der Ansprüche 1, 6,11 und 13 erzielt.

Bei derartigen Gleisketten ergibt sich der besondere Vorteil, daß einerseits der Polygoneffekt, der sich beim Kontakt starr ausgebildeter Kettenglieder mit den Rädern des Gleiskettenfahrwerks einstellt und der mit einer starken Schwingungserzeugung verbunden ist, weitestgehend gemindert ist, und daß andererseits eine hohe Querstabilität bei aus elastomarem Mate-

- 3 -

0176675

rial mit biegeweichen Stahleinlagen gefertigten Kettengliedern gegeben ist, ohne daß hierfür gesonderte Maßnahmen, wie z.B. ineinandergreifende Kettenführungszähne (DE-OS 26 14 963) erforderlich sind.

Durch die in Form einer 8 um die Querschnittsflächen der beiden Bolzen geschlungenen Fäden wird bei einer Biegung des Kettenelementes die zwischen oberer und unterer Hälfte sich einstellende unterschiedliche Längung der Fäden kompensiert, wodurch einerseits zusätzliche Krafteinleitungen infolge der Biegung vermieden werden und andererseits zwischen den Fäden und dem diese umgebenden elastomeren Material keine nennenswerten Relativbewegungen eintreten, die zu einer Walkbeanspruchung und daraus resultierender vorzeitiger Alterung führen könnten. Durch die gleichmäßige Verteilung der Fäden zwischen den Krafteinleitungselementen erübrigt sich die Anordnung von zusätzlichem Stützgewebe.

In einer bevorzugten Ausführungsform sind die zwischen den beiden Verbindungsstellen hin- und hergeführten Fäden schräg zur Längsrichtung des Kettengliedes gewickelt, so daß sie sich in der Mitte des Kettengliedes diagonal kreuzen. Neben der Verbesserung der Stützgewebewirkung wird damit vor allem eine hohe Quersteifigkeit erzielt, durch welche das Kettenglied auch großen Querkräften standhalten kann.

Vorzugsweise sind an den Verbindungsstellen Hülsen in das elastomare Material einvulkanisiert, in denen die Verbinder- oder Scharnierbolzen drehfest lagerbar sind. Im letzteren Falle, der Verbindung der Kettenglieder mittels Scharnierverschluß, sind die Hülsen mit Unterbrechungen angeordnet, in welche entsprechende Hülsenbereiche des anschließenden Kettengliedes eingreifen. Sowohl bei einer Verbinderkette als auch bei einer Scharnierkette sind die Bolzen drehfest in den Hülsen gelagert, wobei die Kettenglieder ohne Spalt aneinanderliegen. Durch die spaltfrei aneinandergefügten Kettenglieder aus überwiegend elastomerem Material ist eine biegeweiche Elastomerbandkette geschaffen, die in Zugrichtung nahezu dehnungslos ist und die beim Kontakt mit den Fahrwerksrädern im Vergleich zu Ketten mit endlicher Kettenteilung und durch Spalte hervorgerufenen Gliedstößen nur noch geringe Schwingungen verursacht.

In einer weiteren Ausführungsform ist in der Verbindungsebene zwischen den Achslinien der an den beiden Verbindungsstellen lagerbaren Bolzen in einer oder in mehreren parallelen Lagen ein Schubfeldträger aus biegeweichem und schubsteifen Material hoher Zugfestigkeit angeordnet. Hierzu sind beispielsweise eine oder mehrere Folien aus Federstahl geeignet, die an den Randbereichen mit den Hülsen verschweißt sind. Die Folie und die Hülsen können auch einstückig als Gesenkschmiedeteil ausgebildet sein. Die Folie kann ferner durchbrochen sein, um die Einbettung des Folienmaterials im elastomeren Material zu verbessern.

Zur Steigerung der Steifigkeit des Kettengliedes bei Beanspruchungen, die eine Biegung desselben um dessen Längsachse hervorrufen, können ober- und unterhalb des Schubfeldträgers bzw. der Folie in parallelem Abstand im elastomeren Material jeweils eine oder mehrere Stützschichten angeordnet sein, die quer zur Laufrichtung gewellt sind und ebenfalls aus einem biegeweichen Material, wie z.B. Federstahlblech, bestehen. Die bei einer Biegung des Kettengliedes um seine Querachse, beispielsweise beim Einlaufen in die Umlenkrolle sich ergebenden Längungen auf der oberen Seite, bzw. Stauchungen auf der unteren Seite des Schubfeldträgers werden dabei durch die Welligkeit der Stützschicht kompensiert.

In einer anderen Ausführungsform weist das Kettenglied an seinen Verbindungsstellen zu den anschließenden Kettengliedern starre Querstege aus Stahl auf, die mit den Querstegen der nachfolgenden Kettenglieder starr und formschlüssig verbindbar sind, wobei die Querstege eines Kettengliedes einstückig mit einem Schubfeldträger aus biegeweichem und schubsteifen Material hoher Zugfestigkeit, beispielsweise einem Federstahlblech verbunden sind.

Die Querstege werden dabei vom elastomeren Material der ohne Spalt aneinanderliegenden Kettenglieder überragt, wobei auch die Verbindungsschrauben tiefer liegend angeordnet sind.

Zweckmäßigerweise sind die Schubfeldträger an den Randbereichen der Öffnungen, die für den Zahneingriff der Triebzahnräder vorgesehen sind, wellig ausgeführt, um an diesen Stellen die erhöhte Dehnung kompensieren zu können, die durch die Krafteinleitung über die Querstege hervorgerufen wird.

In einer bevorzugten Ausführungsform eines Kettengliedes mit Querstegen und zwischen diesen in der neutralen Faser angeordneten biegeweichen Elementen aus Stahl hoher Zugfestigkeit, sind diese aus mehreren Lagen dünner Folien aus Federstahl gebildet. Damit sind die Querstege eines Kettengliedes über einen Schubfeldträger verbunden, der eine hohe Biegewechselfestigkeit besitzt und zur Aufnahme von Querkräften geeignet ist. Zweckmäßigerweise sind die aus dünnen Folien zusammengesetzten Schubfeldträger an den Querstegen mittels Klemmleisten befestigt.

Ausführungsbeispiele der Erfindung werden nachfolgend anhand der Zeichnung näher beschrieben.

Es zeigen in schematischer Darstellung
> Fig. 1 eine Anzahl von Kettengliedern einer Verbinderkette gemäß der Schnittlinie I-I in Fig. 2,
> Fig. 2 die Draufsicht auf die Kettenglieder gemäß Fig. 1 mit der Wicklungsanordnung der zu Gurten verwobenen Fäden,
> Fig. 3 eine Anzahl von Kettengliedern einer Scharnierkette gemäß der Schnittlinie III-III in Fig. 4,
> Fig. 4 die Draufsicht auf die Kettenglieder gemäß Fig. 3 mit der Wicklungsanordnung der zu Gurten verwobenen Fäden,

Fig. 5 eine Anzahl von Kettengliedern einer anderen Ausführungsform einer Scharnierkette gemäß der Schnittlinie V-V in Fig. 6,

Fig. 6 die Ansicht der Kettenglieder gemäß der Schnittlinie VI-VI in Fig. 5,

Fig. 7 einen Teilausschnitt einer weiteren Ausführungsform einer Gleiskette mit Ausschnitten für den Zahneingriff des Triebrades,

Fig. 8 die Seitenansicht der Gleiskette gemäß der Schnittlinie VIII-VIII in Fig. 7,

Fig. 9 ein Kettenglied einer weiteren Ausführungsform in der Draufsicht auf die von den Laufrädern überrollte Lauffläche,

Fig. 10 eine Schnittansicht des Kettengliedes gemäß der Schnittlinie X-X in Fig. 9 und

Fig. 11 eine Schnittansicht des Kettengliedes gemäß der Schnittlinie XI-XI in Fig. 9.

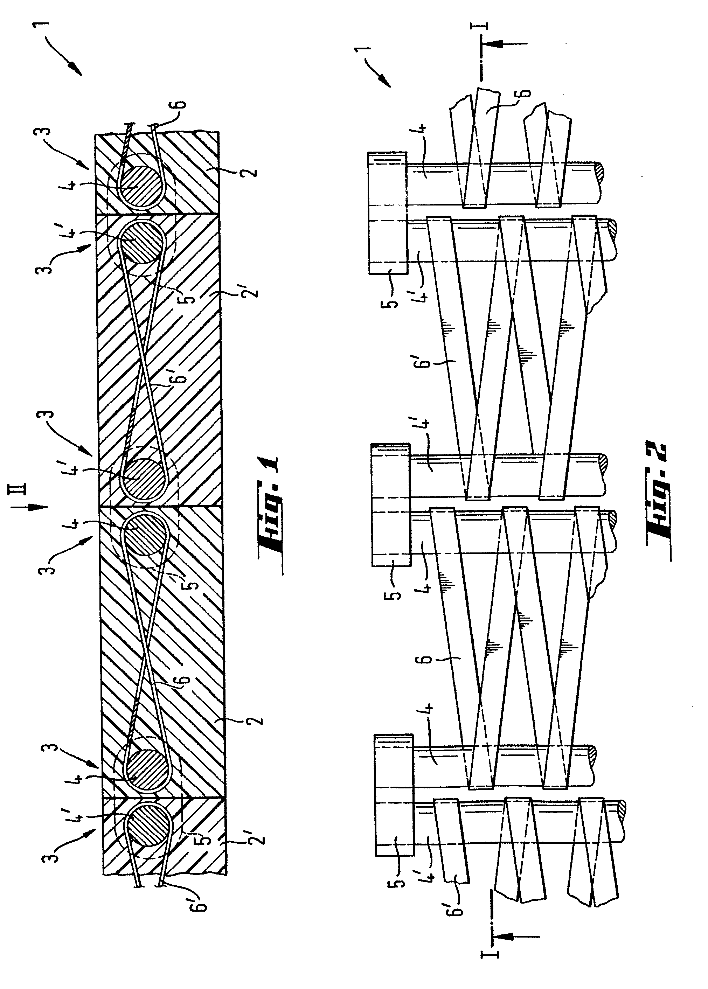

Die in den Figuren 1 und 2 dargestellte Gleiskette 1 stellt eine Verbinderkette dar, bei der die einzelnen Kettenglieder 2 und 2' an den Verbindungsstellen 3 jeweils von Verbinderbolzen 4 und 4' durchsetzt sind, die die Kettenglieder 2 und 2' seitlich überragen, wobei die überstehenden Bereiche der Verbinderbolzen 4 und 4' zweier benachbarter Kettenglieder 2 und 2' mit einem Verbinder 5 gekoppelt sind.

Die Gleiskette 1 steht mit diesem Verbinder 5 mit dem Zahnkreuz des Triebrades des Gleiskettenfahrzeugs in Eingriff.

Die Kettenglieder 2 und 2' bestehen aus elastomerem Material, beispielsweise Gummi, und sind zueinander so angeordnet, daß sie ohne Spalt aneinander liegen. Die Verbinderbolzen 4 und 4' sind drehfest in den Kettengliedern 2 und 2' einvulkanisiert. Diese können auch in einer im Kettenglied 2 bzw. 2' eingebetteten Hülse (nicht dargestellt) drehfest gelagert sein.

Zwischen den beiden Verbinderbolzen 4 bzw. 4' sind aus Fäden mit hoher Zugfestigkeit gewobene Gurte 6 und 6' in einer Weise hin- und hergeführt, in der die Querschnittsflächen der an den beiden Verbindungsstellen 3 eingelagerten Verbindungsbolzen 4 und 4' im jeweils abwechselnden Drehsinn umschlungen werden. Desgleichen sind bei einer mit Hülsen (nicht dargestellt) ausgestatteten Ausführungsform die Gurte um die Hülsen geschlungen. Die Gurte 6 und 6' zeichnen in der Darstellung nach Fig. 1 die Form einer 8, wodurch sichergestellt wird, daß die bei einer Biegung des Kettengliedes sich einstellenden Längungen und Stauchungen im oberen und unteren Bereich des Kettengliedes sich kompensieren. Relativbewegungen zwischen den Fäden bzw. Gurten und dem sie umgebenden elastomeren Material werden dadurch weitestgehend reduziert, so daß keine zu vorzeitiger Alterung führende übermäßige Walkarbeit eintreten kann.

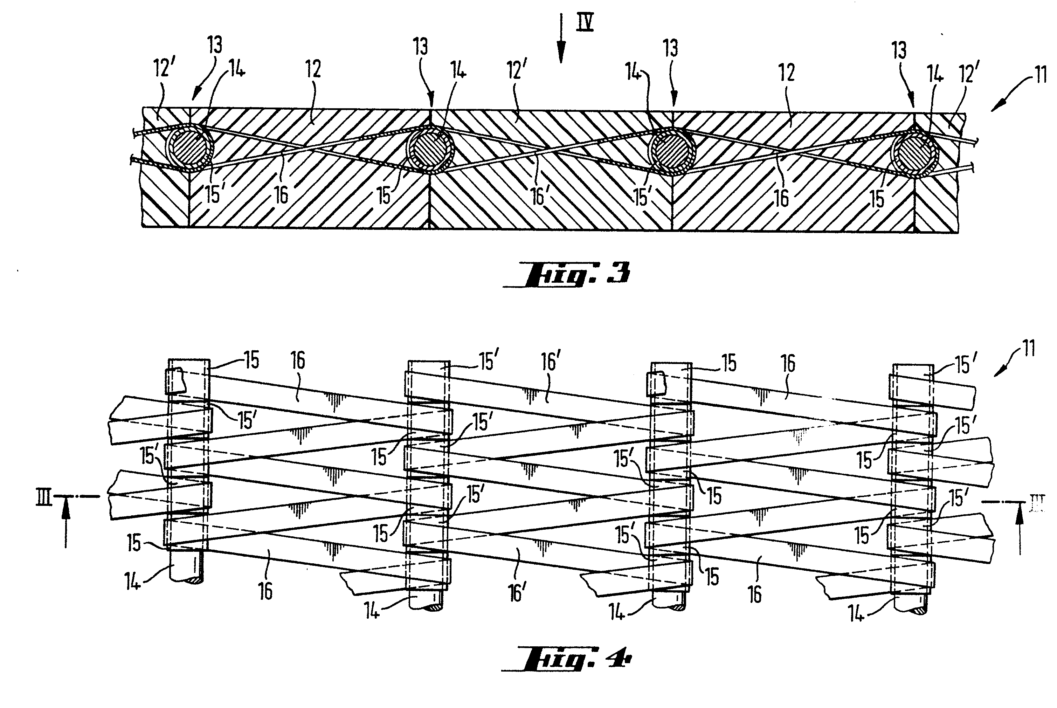

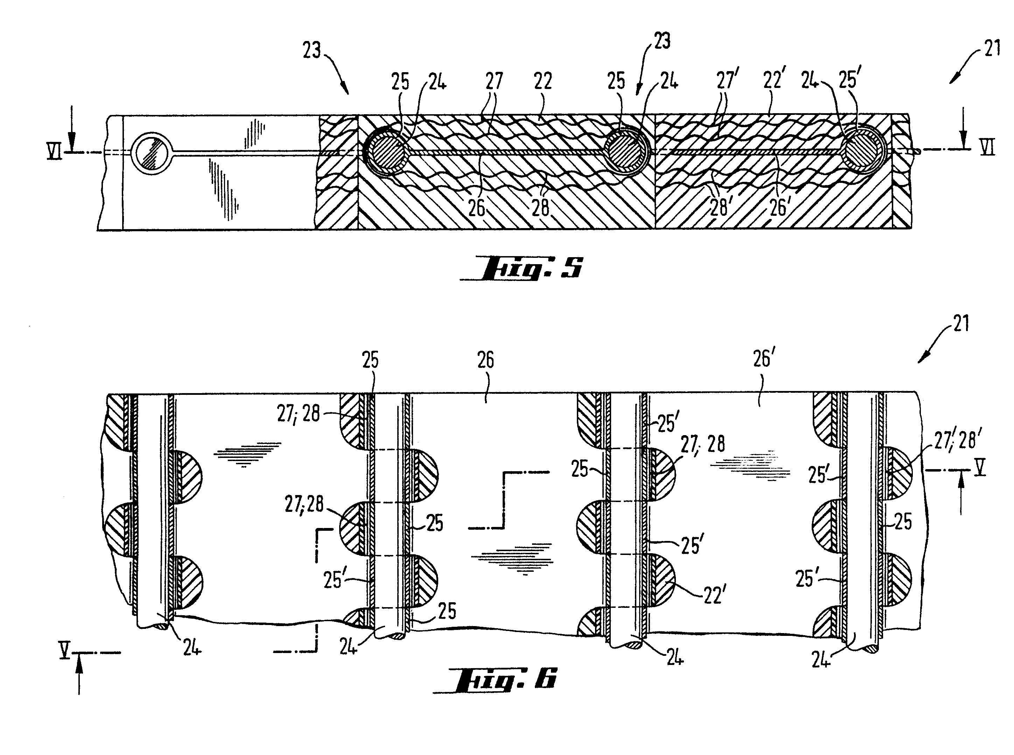

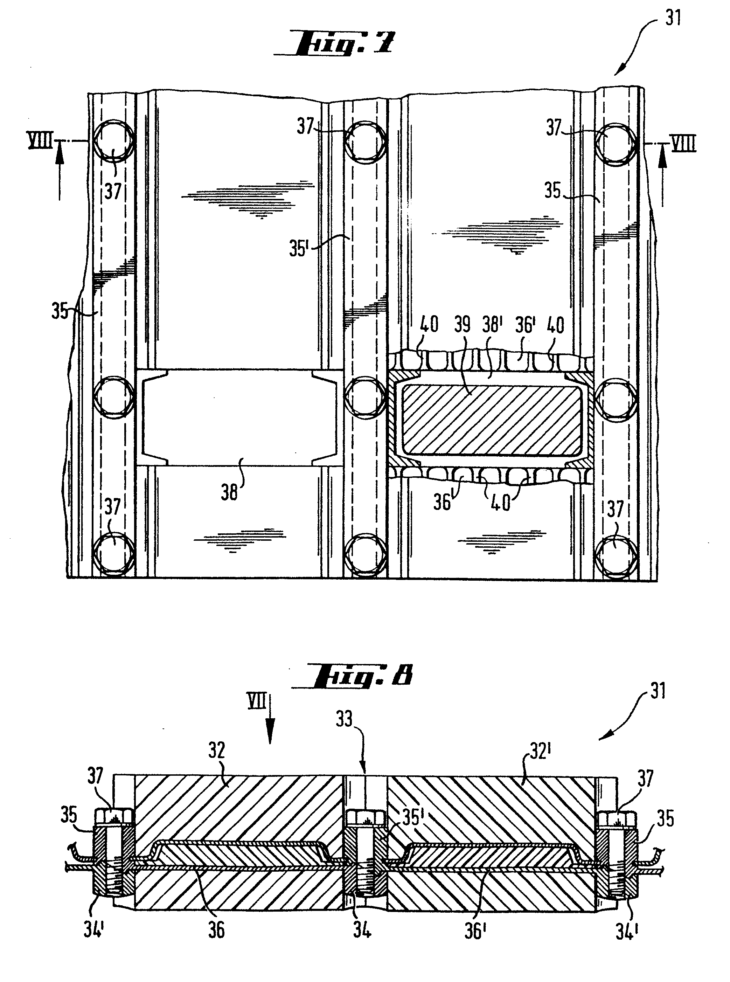

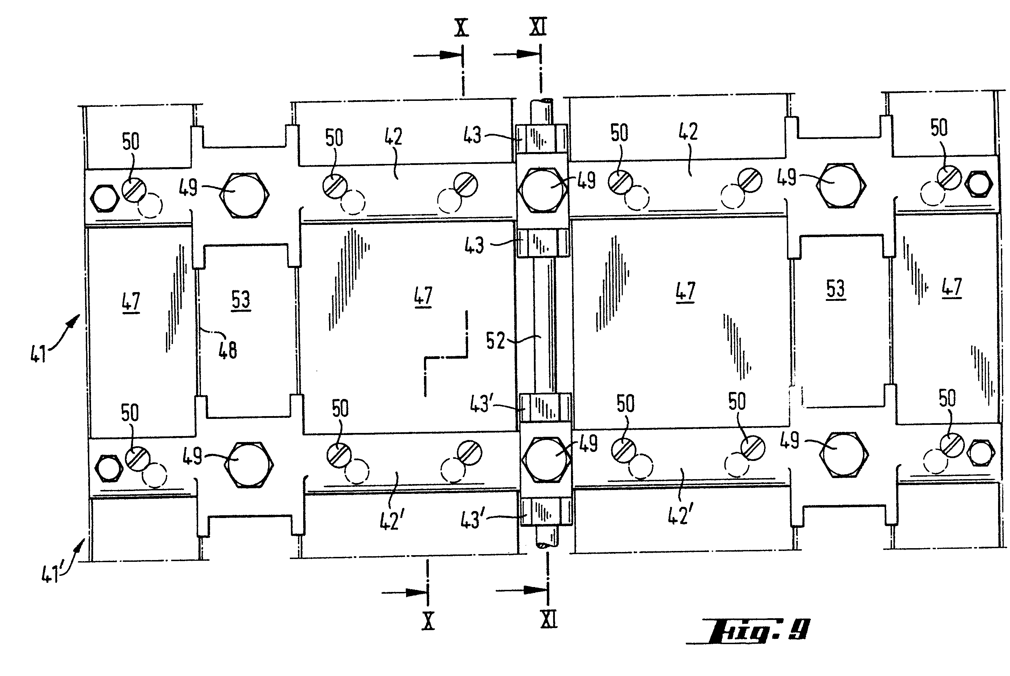

Die in den Figuren 3 und 4 dargestellte Gleiskette 11 stellt eine Scharnierkette dar, bei der die einzelnen Kettenglieder 12 und 12' an ihren Verbindungsstellen 13 abwechselnd Ausnehmungen und Vorsprünge aufweisen, die scharnierartig ineinandergreifen und die von einem gemeinsamen Scharnierbolzen 14 durchsetzt sind. Die Scharnierbolzen
sind in Hülsen 15 und 15' drehfest gelagert, von
denen die Hülsen 15 im Kettenglied 12 und die Hülsen
15' im Kettenglied 12' einvulkanisiert sind. Die
Hülsen 15 und 15' sind jeweils von aus Fäden hoher
Zugfestigkeit gewobenen Gurten 16 und 16' umschlungen. Die Kettenglieder 12 und 12' bestehen aus
elastomerem Material, in dem die Gurte 16 und 16'
einvulkanisiert sind. Die Kettenglieder 12 und 12'
sind einander ohne Spalt zugeordnet.

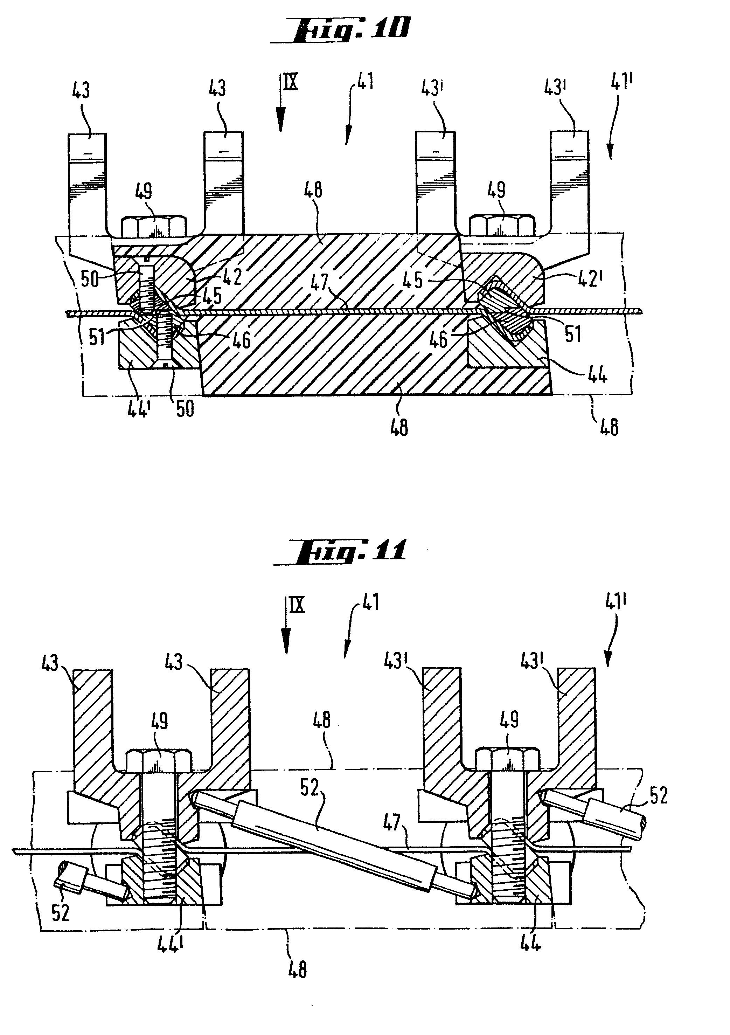

Die in den Figuren 5 und 6 dargestellte Gleiskette 21
stellt eine andere Ausführungsform einer Scharnierkette dar, bei der die einzelnen Kettenglieder 22
und 22' an ihren Verbindungsstellen 23 scharnierartig ineinandergreifende Ausnehmungen und Vorsprünge aufweisen, die von einem gemeinsamen Scharnierbolzen 24 durchsetzt sind. Die Scharnierbolzen
sind in Hülsen 25 und 25' drehfest gelagert, die
im elastomaren Material der Kettenglieder 22 und 22'
einvulkanisiert sind. Die jeweils aus Teilstücken
zusammengesetzten Hülsen eines Kettengliedes sind
in der Verbindungsebene zwischen den Achslinien
zweier Scharnierbolzen einstückig mit einem Schubfeldträger 26 und 26' aus biegeweichem und schubsteifen Material, beispielsweise einer Folie aus
Federstahl, miteinander verbunden. Die Hülsen und
der Schubfeldträger können einstückig, beispielsweise als Gesenkschmiedeteil ausgebildet sein, die
Hülsen können ferner mit dem Schubfeldträger verschweißt sein oder der Schubfeldträger kann an den
Verbindungsstellen hülsenartig ausgeformt sein.

Im parallelen Abstand zum Schubfeldträger 26 und 26' sind auf der oberen und der unteren Seite jeweils zwei Stützschichten 27 und 27' sowie 28 und 28' im elastomeren Material der Kettenglieder 22 und 22' einvulkanisiert, wobei die oberen und unteren Stützschichten nach Umschlingung der Hülsen miteinander verbunden sind.

Die Stützschichten 27 und 27' sowie 28 und 28' sind, wie aus Fig. 5 zu ersehen, mit quer zur Kettenlängsachse verlaufenden Wellen ausgestaltet, wodurch die Stützschichten in einer quer zur Kettenlängsachse ausgerichteten Biegeachse biegeweich sind und in einer in Kettenlängsachse verlaufenden Biegeachse aufgrund des durch die Wellenstruktur bedingten höheren Trägheitsmomentes eine hohe Steifigkeit besitzen. Dank der Wellenstruktur lassen sich die bei einer Biegung quer zur Kettenlängsachse auftretenden Längungen und Stauchungen der Stützschichten ohne Verursachung stärkerer Widerstandskräfte kompensieren.

Die in den Figuren 7 und 8 dargestellte Gleiskette 31 weist Kettenglieder 32 und 32' auf, die an den Verbindungsstellen 33 mit Querstegen 34 und 35 sowie 34' und 35' miteinander koppelbar sind. Die Querstege der Kettenglieder 32 und 32' sind durch Schubfeldträger 36 und 36' einstückig miteinander verbunden. Die Querstege 34 und 35' weisen ineinandergreifende Nuten auf durch die die Querstege mittels Schrauben 37 formschlüssig verbindbar sind.

Die Querstege sind im elastomeren Material der Kettenglieder 32 und 32' eingebettet, das auch die Schrauben 37 überragt und das ohne Spalt jeweils am anschließenden Kettenglied anliegt.

Die Kettenglieder 32 und 32' haben Öffnungen 38 und 38' ausgebildet, in welche die Zähne 39 der Triebräder zum Eingriff kommen. An den Randbereichen dieser Öffnungen weisen die Schubfeldträger 36 und 36' quer zur Kettenlängsrichtung verlaufende Wellen 40 auf, durch welche infolge der Krafteinleitung örtlich überhöhte Spannungen durch größere Dehnbarkeit der Randbereiche kompensiert werden.

Die in den Figuren 9 bis 11 dargestellte Gleiskette weist einander identische Kettenglieder 41 und 41' auf, wobei in Fig. 10 die Kontur eines Kettengliedes in dicken Vollinien umrissen ist. Jedes Kettenglied 41, 41' besitzt zwei Querstege, von denen ein Quersteg 42, 42' der von den Laufrollen (nicht dargestellt) überrollten Lauffläche zugeordnet ist und Kettenführungszähne 43, 43' trägt. Der andere Quersteg 44, 44' ist der Bodenseite der Gleiskette zugeordnet. Jeder der Querstege 42 und 44 ist mit einer Klemmleiste 45 und 46 versehen, mit denen ein aus mehreren dünnen Folien aus Federstahlblech bestehender Schubfeldträger 47 fest mit den Querstegen 42 und 44 verbunden ist. Der Schubfeldträger 47 befindet sich in der neutralen Faser des Kettengliedes und ist zu beiden Seiten von elastomerem Material 48 umgeben. Die Querstege sind sowohl auf der von den Laufrollen des Gleiskettenfahrwerks überrollten Lauffläche als auch auf der Bodenseite der Gleiskette mit elastomerem Material überzogen. Die Querstege 42 und 44' bzw.

42' und 44 sind durch Schrauben 49 miteinander verbunden, die in den von den Laufrollen nicht überfahrenen Bereichen der Gleiskette angeordnet sind. Die Klemmleisten 45 und 46 sind durch gesonderte Schrauben 50 mit den Querstegen 42, 42' und 44, 44' verbunden und weisen Verriegelungskanten 51 auf, die mit den Verriegelungskanten der Klemmleiste des Quersteges des angrenzenden Kettengliedes einen festen, hohe Zugkräfte standhaltenden Formschluß ergeben. Dabei ist es, wie in Fig. 10 dargestellt, besonders vorteilhaft, die Klemmleisten schräg zur Kettenzugrichtung in den Querstegen zu verankern, um eine möglichst große Fläche für den Reibschluß zwischen der Klemmleiste und dem Quersteg einerseits und dem Schubfeldträger andererseits zu erhalten. Ein weiterer Vorteil ist darin zu sehen, daß die Verriegelungskanten so angeordnet sind, daß sie bei Zugbelastung der Gleiskette auf Druck beansprucht werden.

Zwischen dem mit Kettenführungszähnen 43, 43' ausgestatteten Quersteg 42 und dem Quersteg 44, ist eine Druckstange 52 (Fig. 11) angeordnet, die für den Fall, daß die Kettenführungszähne 43 aus der Führungsrille des Laufrades ausspuren und von der Lauffläche des Laufrades überrollt werden, verhindert, daß die Kettenglieder in den biegeweichen Bereichen zwischen den Querstegen zu stark einknicken.

Für den Zahneingriff der Zähne der Triebräder (nicht dargestellt) sind in den Kettengliedern Öffnungen 53 (Fig. 9) vorgesehen.

0176675

Patentansprüche

1. Kettenglied einer Gleiskette, das an seinen Verbindungsstellen zu den anschließenden Gliedern von Bolzen, beispielsweise Verbinderbolzen oder Scharnierbolzen, durchsetzt ist, mit denen die Kettenglieder miteinander form- und kraftschlüssig verbindbar sind, d a d u r c h   g e k e n n z e i c h n e t , daß das Kettenglied (2, 2'; 12, 12') aus einem elastomeren Material, beispielsweise Gummi, besteht, in dem biegeweiche Fäden hoher Zugfestigkeit in einer Weise eingelagert sind, in der die Fäden zwischen den beiden Verbindungsstellen hin- und hergeführt sind, wobei die Fäden die Querschnittsflächen der an den beiden Verbindungsstellen lagerbaren Bolzen (Verbinderbolzen 4, 4' Fig. 1; Scharnierbolzen 14, Fig. 3) im jeweils abwechselnden Drehsinn umschlingen.

2. Kettenglied nach Anspruch 1, d a d u r c h   g e - k e n n z e i c h n e t , daß die zwischen den beiden Verbindungsstellen hin- und hergeführten Fäden schräg zur Längsrichtung des Kettengliedes (2, 2'; 12, 12') verlaufen und sich diagonal kreuzen.

3. Kettenglied nach den Ansprüchen 1 und 2, d a - d u r c h   g e k e n n z e i c h n e t , daß die Fäden zu Gurten (6, 6'; 16, 16') verwoben sind.

4. Kettenglied nach den Ansprüchen 1 bis 3, d a - d u r c h   g e k e n n z e i c h n e t , daß an den Verbindungsstellen (3, 13) von den Fäden umschlungene Hülsen zur Lagerung der Bolzen eingeformt sind.

5. Kettenglied nach Anspruch 4, d a d u r c h   g e - k e n n z e i c h n e t , daß die Bolzen in den Hülsen drehfest gelagert sind.

6. Kettenglied einer Gleiskette, das an seinen Verbindungsstellen zu den anschließenden Kettengliedern von Bolzen, beispielsweise Verbindungsbolzen oder Scharnierbolzen, durchsetzt ist, mit denen die Kettenglieder miteinander form- und kraftschlüssig verbindbar sind, d a d u r c h   g e k e n n - z e i c h n e t , daß das Kettenglied (22, 22') aus einem elastomeren Material besteht, in dem im wesentlichen in der Verbindungsebene zwischen den Achslinien der an den beiden Verbindungsstellen (23) lagerbaren Bolzen (Scharnierbolzen 24, Fig. 5) in einer oder mehreren Lagen ein Schubfeldträger (26, 26') aus biegeweichem und schubsteifen Material hoher Zugfestigkeit angeordnet ist.

7. Kettenglied nach Anspruch 6, d a d u r c h   g e - k e n n z e i c h n e t , daß der Schubfeldträger (26, 26') an den beiden Verbindungsstellen (23) jeweils eines Kettengliedes (22, 22') einstückig mit den Hülsen (25, 25') zur Lagerung der Bolzen verbunden ist.

8. Kettenglied nach Anspruch 7, d a d u r c h   g e - k e n n z e i c h n e t , daß die Hülsen (25) des einen Kettengliedes (22) zwecks scharnierartiger Kopplung mit dem anschließenden, entsprechend ausgebildeten Kettenglied (22') mit Unterbrechungen versehen sind, in die die entsprechenden, mit dem gemeinsamen Scharnierbolzen (24) verbindbaren Hülsen (25') des angrenzenden Kettengliedes (22') eingreifen.

9. Kettenglied nach den Ansprüchen 6 bis 8, d a -
   d u r c h   g e k e n n z e i c h n e t , daß
   oberhalb und unterhalb des Schubfeldträgers
   (26, 26') und in parallelem Abstand zu diesem im
   elastomeren Material des Kettengliedes (22, 22')
   jeweils eine oder mehrere Stützschichten (27, 27';
   28, 28') angeordnet sind, die quer zur Laufrichtung
   gewellt sind und aus einem biegeweichen Material,
   wie z.B. Federstahlblech bestehen.

10. Kettenglied nach Anspruch 3, d a d u r c h   g e -
    k e n n z e i c h n e t , daß der Schubfeldträger
    aus einem Federstahlblech besteht, das an den Verbindungsstellen in Form von die Scharnierbolzen
    umschließenden Hülsen gebogen ist.

11. Kettenglied einer Gleiskette, das an seinen Ver-
    bindungsstellen zu den anschließenden Kettenglie-
    dern starre Querstege aus Stahl aufweist, die mit
    den Querstegen der nachfolgenden Kettenglieder
    starr und formschlüssig verbindbar sind, wobei
    das Kettenglied zwischen seinen beiden Querstegen
    aus elastomerem Material besteht, in dem biegeweiche Elemente aus Stahl hoher Zugfestigkeit
    eingelagert sind, d a d u r c h   g e k e n n -
    z e i c h n e t , daß die starren Querstege
    (34, 35; 34' 35') einstückig mit einem das biegeweiche Element darstellenden Schubfeldträger
    (36, 36') aus einem dünnen Verbindungsblech verbunden sind.

12. Kettenglied nach Anspruch 11, d a d u r c h g e k e n n z e i c h n e t , daß das Kettenglied (32, 32') Öffnungen (38, 38') für den Zahneingriff der Zähne (39) der Triebräder ausgebildet hat, wobei der Schubfeldträger (36, 36') an den Randbereichen der Öffnungen (38, 38') in quer zur Längsrichtung der Gleiskette verlaufenden Wellen (40) geformt ist.

13. Kettenglied einer Gleiskette, das an seinen beiden Verbindungsstellen zu den anschließenden Kettengliedern starre Querstege aus Stahl aufweist, die mit den Querstegen der nachfolgenden Kettenglieder verbindbar sind, wobei das Kettenglied zwischen seinen beiden Querstegen aus elastomerem Material besteht, in dem biegeweiche Elemente aus Stahl hoher Zugfestigkeit eingelagert sind, d a d u r c h g e k e n n z e i c h n e t , daß die biegeweichen Elemente aus einem Schubfeldträger (47) bestehen, der aus mehreren Lagen dünner Folien aus Federstahl gebildet ist und der mit den beiden Querstegen (42, 44) des Kettengliedes (41) verbunden ist.

14. Kettenglied nach Anspruch 13, d a d u r c h g e k e n n z e i c h n e t , daß der Schubfeldträger (47) an den beiden Querstegen (42, 44) jeweils mittels einer Klemmleiste (45) befestigt ist.

15. Kettenglied nach einem der Ansprüche 13 oder 14, d a d u r c h g e k e n n z e i c h n e t , daß von den beiden Querstegen (42, 44) eines Kettengliedes (41) jeweils ein Quersteg (42) oberhalb und ein Quersteg (44) unterhalb des Schubfeldträgers (47) angeordnet ist.

16. Kettenglied nach Anspruch 15, d a d u r c h
g e k e n n z e i c h n e t , daß die Klemmleisten
(45) Verriegelungskanten (51) aufweisen, die in
die Verriegelungskanten der Klemmleisten der Querstege der jeweils angrenzenden Kettenglieder formschlüssig eingreifen.

17. Kettenglied nach einem der Ansprüche 14 bis 16,
d a d u r c h  g e k e n n z e i c h n e t ,
daß zwischen dem einen, Kettenführungszähne (43)
tragenden Quersteg (42) und dem anderen, der Bodenfläche zugewandten Quersteg (44) eines Kettengliedes (41) eine die Ebene des Schubfeldträgers (47)
durchsetzende Druckstange (52) gelenkig befestigt
ist.

18. Kettenglied nach einem der Ansprüche 13 bis 17,
d a d u r c h  g e k e n n z e i c h n e t ,
daß das Kettenglied (41) zwischen den Querstegen
(42 und 44) Öffnungen (53) für den Zahneingriff der
Zähne der Triebräder ausgebildet hat.

**Fig. 1**

**Fig. 2**

_Fig. 3_

_Fig. 4_

**Fig: 5**

**Fig: 6**

**Fig. 7**

31

VIII

37    37    37    31

35'    35

40  39  38'  36'  40

38    39

37    36    40    37

38

**Fig. 8**

VII    33    31

32    32'

37    37

35    35'    35

34'    36    34    36'    34'

X    XI

50    50    42    43    50    42    50

49    49    49    49

43

47    53    47    47    53    47

41    48    52

50    50    43'    50    50    50

49    49    49

41'    42'    43'    42'

X    XI

*Fig. 9*

24/27

0176675

*Fig: 10*

*Fig: 11*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 141 600 (ORPANA)<br>* Spalte 2, Zeile 57 - Spalte 3, Zeile 34; Figuren 3,4 * | 1,4,5 | B 62 D 55/20 |
| A | | 2 | |
| X | US-A-1 966 450 (KNOX)<br>* Seite 1, Zeilen 74-90; Figuren 4,5 * | 1 | |
| Y | | 6-8 | |
| A | | 2,5,10,11,13 | |
| Y | FR-A- 726 522 (TECALEMIT)<br>* Figur 5 * | 6-8 | RECHERCHIERTE SACHGEBIETE (Int. Cl.4) |
| A | | 10 | B 62 D 55/00 |
| X | US-A-2 914 360 (DUCLOT)<br>* Spalte 2, Zeile 58 - Spalte 3, Zeile 46 * | 1,4,5 | |
| A | | 2 | |
| | --- -/- | | |

Der vorliegende Recherchenbericht wurde für alle Patentansprüche erstellt.

| Recherchenort | Abschlußdatum der Recherche | Prüfer |
|---|---|---|
| BERLIN | 13-12-1985 | STANDRING M A |

**Europäisches Patentamt**

**EUROPÄISCHER RECHERCHENBERICHT**

**0176675**
Nummer der Anmeldung

EP 85 10 8649

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-B-1 024 381 (DUNLOP)<br><br>* Spalte 3, Zeile 24 - Spalte 4, Zeile 31; Figuren 3,5,6 *<br><br>--- | 2,13-15 | |
| A | US-A-2 494 065 (SLEMMONS)<br>* Spalte 2, Zeilen 25-53; Figur 2 *<br><br>--- | 3,9 | |
| A | US-A-1 774 815 (ROBERTSON)<br>* Seite 2, Zeilen 28-33, Figur 2 *<br><br>--- | 11,13 | |
| A | US-A-3 622 209 (LEYDEN)<br><br>--- | | |
| D,A | DE-A-2 614 963 (DIEHL)<br><br>--- | | RECHERCHIERTE SACHGEBIETE (Int Cl.4) |
| D,A | DE-A-2 706 891 (GRAVBERGSKOVENS)<br><br>----- | | |

*Der vorliegende Recherchenbericht wurde für alle Patentansprüche erstellt*

| Recherchenort BERLIN | Abschlußdatum der Recherche 13-12-1985 | Prüfer STANDRING M A |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82